Europäisches Patentamt

European Patent Office

Office européen des brevets

(19)

(11) Numéro de publication: **0 208 616**
**B1**

(12) **FASCICULE DE BREVET EUROPEEN**

(45) Date de publication du fascicule du brevet:
01.08.90

(51) Int. Cl.⁵: **F16F 1/46, F16F 7/14**

(21) Numéro de dépôt: 86401487.3

(22) Date de dépôt: 04.07.86

(54) **Dispositif de butée élastique amortie.**

(30) Priorité: 05.07.85 FR 8510357

(43) Date de publication de la demande:
14.01.87 Bulletin 87/3

(45) Mention de la délivrance du brevet:
01.08.90 Bulletin 90/31

(84) Etats contractants désignés:
DE GB IT SE

(56) Documents cités:
AU-A- 520 948
CH-A- 144 449
DE-A- 3 014 593
US-A- 3 946 976

(73) Titulaire: SOCIETE D'EXPLOITATION DES RESSORTS
AUTO-AMORTISSEURS JARRET Société Anonyme
dite:, 15 rue Godot-de-Mauroy, F-75009 Paris(FR)

(72) Inventeur: Jarret, Jean, 21, avenue Foch,
F-75016 Paris(FR)
Inventeur: Jarret, Jacques, 32, allée des Soudanes,
F-78430 Louveciennes(FR)

(74) Mandataire: Levesque, Denys et al, Cabinet Beau de
Loménie 55, rue d'Amsterdam, F-75008 Paris(FR)

## Description

La présente invention se rapporte à un dispositif de butée élastique amortie, constituant un ressort auto-amortisseur qui présente des réactions mécaniques progressives correspondant à la somme algébrique de réactions élastiques et de frottements, ce dispositif étant propre à contrôler les déplacements relatifs de deux pièces mobiles l'une par rapport à l'autre suivant une direction déterminée. Un dispositif de ce genre est connu par le document DE-A 3 014 593.

On sait que l'industrie produit des matériaux, généralement thermo-plastiques (non métalliques), tels que des résines polyamides ou aramides, sous forme de fils ou câbles, qui offrent de remarquables propriétés de résistance mécanique et d'élasticité, et sont donc susceptibles, pour une faible masse de matériau, d'accumuler et de restituer une grande quantité d'énergie mécanique, sous réserve que cette énergie soit apportée sous forme de forces de traction pendant une durée d'autant plus brève que la contrainte est plus élevée.

L'invention a pour but de mettre à profit l'existence de ces matériaux pour réaliser des butées élastiques très légères, en adoptant des dispositions qui permettent de dissiper, sous forme de chaleur résultant de frottements, une partie importante de l'énergie mécanique absorbée.

La présente invention concerne ainsi un dispositif de butée élastique amortie qui comprend deux boucles de fil identiques contenues dans des plans parallèles à la direction de déplacement relatif des deux pièces précitées, ces plans étant très rapprochés ou confondus en un même plan, et disposées symétriquement par rapport à un axe parallèle à ladite direction; le fil de chaque boucle, attaché par ses extrémités à l'une des pièces mobiles, passe autour d'un macaron solidaire de l'autre pièce sur lequel il peut glisser avec frottement, tandis que ledit fil est réalisé en un matériau offrant une grande résistance mécanique à la traction et une capacité d'allongement élastique considérable, de préférence en fibres de résine synthétique polyamide ou aramide ("Nylon", "Kevlar", etc.), et que les éléments constitutifs du dispositif sont géométriquement dimensionnes de facon que, lorsque les pièces mobiles se déplacent à partir d'une position relative de repos, le fil de chaque boucle subisse un allongement progressif, et que la partie du fil en contact, direct ou indirect, avec le macaron, glisse sur la surface périphérique de celui-ci.

On entend ici par "fil" aussi bien un fil à brin unique (monofilament) qu'un fil câblé à plusieurs brins, ou câble.

Plus précisément, il convient que les éléments constitutifs du dispositif selon l'invention soient géométriquement dimensionnés de façon que, lorsque les pièces mobiles se déplacent à partir d'une position relative de repos, le fil de chaque boucle subisse un allongement progressif, et que la partie du fil en contact, direct ou indirect, avec le macaron, glisse sur la surface périphérique de celui-ci.

Dans un tel dispositif, lorsque les pièces auxquelles il est associé se déplacent en mouvement réciproque, l'énergie mécanique est accumulée par l'allongement élastique des fils formant les deux boucles précitées, tandis que l'amortissement du mouvement des pièces est obtenu par le frottement des deux fils se déplaçant sur le pourtour des macarons.

Dans une forme de réalisation très simple, chaque macaron présente un contour périphérique circulaire, celui-ci comportant de préférence une gorge qui reçoit le fil de la boucle correspondante.

Par ailleurs, le fil de chaque boucle peut être, au moins dans sa portion médiane en contact avec le macaron, revêtu d'une gaine de frottement qui le protège d'une usure rapide.

Chaque boucle est avantageusement dotée d'un dispositif de réglage de la tension du fil, permettant de doser le degré de précontrainte initiale de celui-ci.

Dans un premier mode de réalisation, on peut prévoir que les extrémités d'attache des boucles soient plus proches de l'axe de symétrie précité que les macarons. Inversement, dans un second mode envisageable, lesdites extrémités sont plus éloignées de l'axe de symétrie que les macarons. Ces derniers sont alors de préférence superposés, leurs contours coincidant au moins approximativement. Plus précisément, les deux macarons superposés peuvent constituer un unique disque comportant pour les deux boucles deux gorges circulaires respectives disposées côte à côte et centrées sur l'axe du disque.

Un dispositif selon l'invention tel que défini ci-dessus constitue une butée élastique amortie, à double effet, susceptible d'autoriser et de limiter les déplacements relatifs de deux pièces mécaniques, dans les deux sens d'une direction déterminée.

D'autres caractéristiques et avantages de l'invention ressortiront plus clairement de la description qui va suivre, en regard des dessins annexés, d'exemples de réalisation non limitatifs.

La figure 1 représente un dispositif de butée amortie selon l'invention, en coupe suivant la ligne I-I de la figure 2.

La figure 2 représente le dispositif de la figure 1 vu suivant la flèche II.

Les figures 3 et 4 représentent, à la manière des figures 1 et 2, une variante d'exécution.

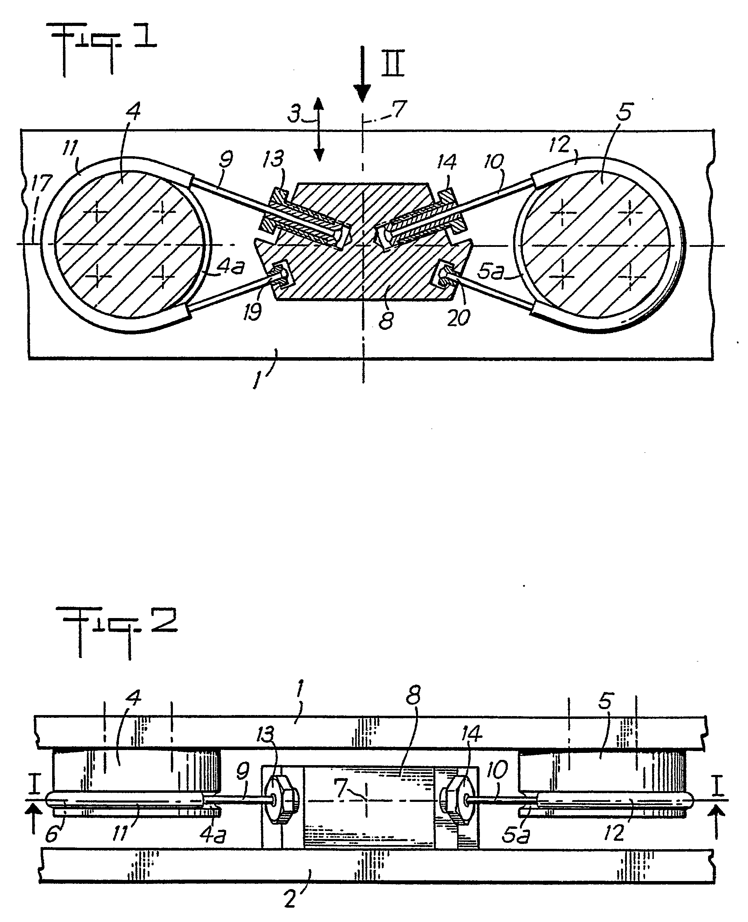

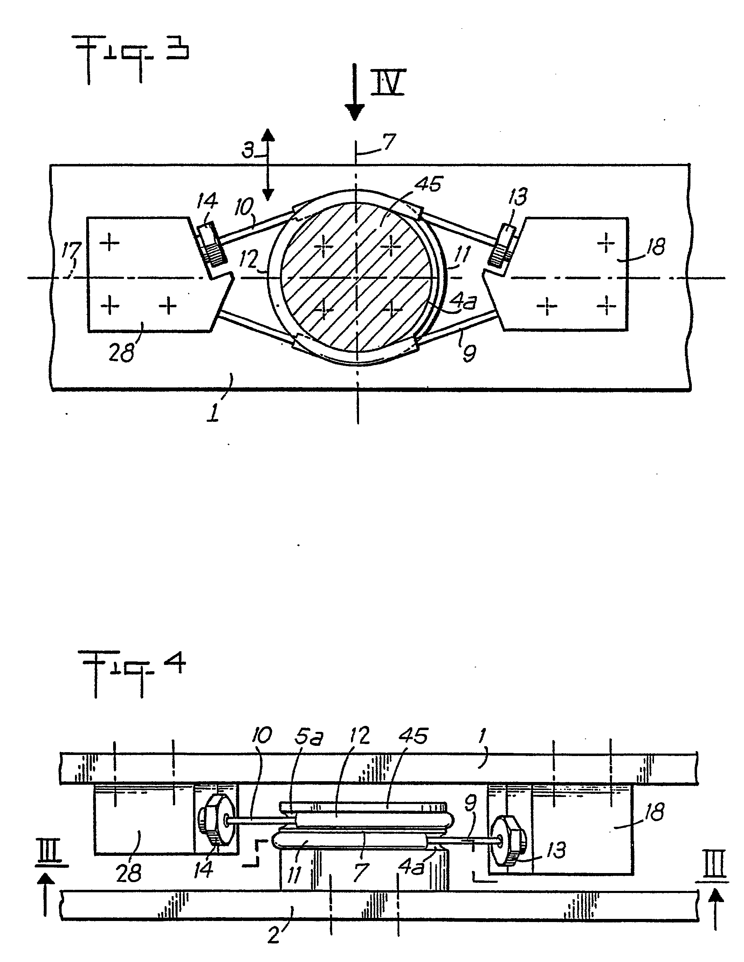

On voit sur les figures 1 et 2 deux pièces 1, 2 susceptibles de se déplacer l'une par rapport à l'autre suivant une direction de translation 3 déterminée. A la pièce 1 sont fixés deux macarons métalliques 4, 5 identiques, offrant à leur périphérie des gorges circulaires 4a, 5a de même diamètre, qui se trouvent situées dans un même plan 6 parallèle à la direction 3, symétriquement par rapport à un axe 7 parallèle à cette direction et contenu dans ledit plan. A la pièce 2 est fixé un bloc 8 disposé entre les macarons 4, 5, à égale distance de ceux-ci.

Le bloc 8 est relié à chacun des macarons 4, 5 par une boucle de fil 9, 10 respective dont les extrémités sont attachées audit bloc et qui ceinture le macaron correspondant en passant dans la gorge périphérique de celui-ci, avec laquelle il est en contact par l'intermédiaire d'une gaine de frottement 11, 12. Les deux boucles sont situées dans le plan 6, symétriquement par rapport à l'axe 7. Chacune est, à une extrémité 19, 20, simplement ancrée dans le bloc 8 et, à son autre extrémité, attachée à celui-ci par un dispositif 13, 14 permettant de régler sa longueur et sa tension au repos.

Les boucles 9, 10 sont réalisées à l'aide de fil ou câble en fibres de résine synthétique du type polyamide ou aramide, telle le "Nylon" ou le "Kevlar", capables de supporter de grandes contraintes mécaniques en traction, avec un allongement élastique considérable et sans déformation permanente appréciable si l'effort est de brève durée. Quant aux gaines de protection 11, 12, elles peuvent être réalisées en matière plastique souple ou en matériau caoutchoutique. En outre, on peut intercaler, entre les gaines et les gorges de glissement 4a, 5a des macarons 4, 5, des patins de frottement (non représentés) en matière plastique ou en métal, qui, en se déplaçant avec les gaines, évitent une usure anormale de ces dernières. En tout cas, il convient que les gorges 4a, 5a présentent, comme représenté, un profil transversal en forme d'arc de cercle, de façon à contenir exactement les gaines respectives 11, 12 de protection des fils formant les boucles 9, 10.

En position neutre (qui est la position représentée sur la figure 1), les quatre branches rectilignes des deux boucles, 9, 10 sont soumises à des forces égales, éventuellement faibles ou même nulles, résultant du réglage initial de tension. Lorsqu'une force extérieure cause le déplacement de la pièce 2 vers le bas par rapport à la pièce 1 (suivant la représentation de la figure 1), la longueur totale de chaque boucle augmente, la longueur des deux branches supérieures augmentant plus rapidement que la longueur des deux branches inférieures se réduit. Cela impose un glissement de la partie médiane gainée de chaque boucle dans la gorge correspondante 4a, 5a des macarons 4, 5.

Les forces exercées sur les branches supérieures, d'une part, et les forces exercées sur les branches inférieures, d'autre part, se composent pour créer une force résultante globale qui s'oppose au déplacement vers le bas de la pièce 2. Cette force résultante augmente avec la course d'une manière très progressive, la réaction élastique unitaire étant sensiblement nulle au départ pour devenir très importante lorsque la longueur totale de chaque boucle augmente fortement, au fur et à mesure que le déplacement écarte les deux pièces mécaniques 1 et 2 de leur position initiale.

Les forces de frottement dans les gorges 4a, 5a augmentent également avec les forces de traction exercées sur les branches des boucles, mais leur résultante s'ajoute aux forces élastiques lorsque les pièces 1, 2 s'éloignent l'une de l'autre, alors qu'elle s'oppose aux forces élastiques lorsque lesdites pièces se rapprochent. Il en résulte un effet amortisseur, réglable par le choix de la tension initiale, qui réduit très rapidement l'amplitude des oscillations périodiques causées par les réactions élastiques s'exerçant entre les pièces 1, 2.

Dans une variante de réalisation où la disposition des éléments est inversée (figures 3 et 4), les gorges 4a, 5a de réception des boucles 9, 10 sont groupées côte à côte sur un même disque 45 fixé à la pièce 2, tandis que deux blocs 18, 28, sont fixés à la pièce 1 symétriquement de part et d'autre du disque 45. La boucle de fil 9 passe sur la gorge 4a et ses extrémités sont attachées au bloc 18, tandis que la boucle 10 passe sur la gorge 5a, ses extrémités étant attachées à l'autre bloc 28. Lesdites boucles sont ici aussi pourvues de dispositifs de réglage de tension 13, 14. La disposition est toujours symétrique par rapport à l'axe 7, avec cette seule différence, sans conséquence en pratique, que les boucles de fil sont non plus dans un même plan 6, mais, comme le montre la figure 4, dans deux plans parallèles très voisins, situés de part et d'autre de l'axe 7.

Ce dernier dispositif fonctionne exactement de la même manière que le dispositif des figures 1 et 2.

Les dispositifs décrits présentant, dans leur situation initiale de repos représentée, une symétrie également par rapport à un axe 17 parallèle aux boucles planes et perpendiculaire à la direction 3 de déplacement des pièces 1, 2, il est clair qu'ils sont capables d'amortir, puis de limiter par effet de butée les déplacements desdites pièces aussi bien dans un sens que dans le sens opposé, et de la même façon. Il s'agit donc de dispositifs à double effet, donc chacun, mis à part ses propriétés d'amortissement, est équivalent à une paire de butées de fin de course classiques. Il apparaît en outre que ces mêmes dispositifs assurent un positionnement relatif suivant l'axe 17 des pièces 1, 2 auxquelles ils sont associés.

L'utilisation de tels dispositifs de butée amortie à double effet est particulièrement avantageuse pour compléter la suspension de véhicules terrestres, en limitant le débattement des roues par rapport à la coque, en assurant le positionnement latéral ou longitudinal de la coque par rapport aux pièces mécaniques non suspendues, et en se substituant éventuellement aux amortisseurs généralement intercalés entre la partie suspendue et la partie non suspendue du véhicule.

## Revendications

1. Dispositif de butée élastique amortie, constituant un ressort auto-amortisseur qui présente des réactions mécaniques progressives correspondant à la somme algébrique de réactions élastiques et de frottements, ce dispositif, propre à contrôler les déplacements relatifs de deux pièces mobiles l'une par rapport à l'autre suivant une direction déterminée, étant caractérisé par le fait qu'il comprend deux boucles de fil (9, 10) identiques, qui sont contenues dans des plans parallèles à la direction (3) de déplacement relatif des deux pièces (1, 2), ces plans étant très rapprochés ou confondus en un même plan (6), et sont disposées symétriquement par rapport à un axe (7) parallèle à ladite direction (3), le fil de chaque boucle (9, 10), attaché par ses extrémités à l'une des pièces mobiles, passant autour d'un macaron (4, 5) solidaire de l'autre pièce (1), sur lequel il peut glisser avec frottement, tandis que ledit fil est réalisé en un matériau offrant une grande résistance mécanique à la traction et une capacité d'allongement élastique considérable, et que ses éléments constitutifs sont géométriquement dimensionnés de façon que, lorsque les pièces mobiles (1, 2) se déplacent à partir d'une position relative de repos, le fil de chaque boucle (9, 10) subisse un allongement progressif, et que la partie du fil en contact, direct ou indirect, avec le macaron (4, 5), glisse sur la surface périphérique de celui-ci.

2. Dispositif selon la revendication 1, caractérisé par le fait que le fil des boucles (9, 10) est réalisé en fibres de résine synthétique polyamide ou aramide.

3. Dispositif selon la revendication 1 ou 2, caractérisé par le fait que chaque macaron (4, 5) présente un contour périphérique circulaire.

4. Dispositif selon l'une quelconque des revendications 1 à 3, caractérisé par le fait que chaque macaron (4, 5) comporte sur son contour une gorge (4a, 5a) qui reçoit le fil de la boucle (9, 10) correspondante.

5. Dispositif selon l'une quelconque des revendications 1 à 4, caractérisé par le fait que le fil de chaque boucle (9, 10) est, au moins dans sa portion médiane en contact avec le macaron (4, 5), revêtu d'une gaine de frottement (11, 12) qui le protège.

6. Dispositif selon l'une quelconque des revendications 1 à 5, caractérisé par le fait que chaque boucle (9, 10) est dotée d'un dispositif (13,14) de réglage de la tension du fil.

7. Dispositif selon l'une quelconque des revendications 1 à 6, caractérisé par le fait que les extrémités d'attache des boucles (9, 10) sont plus proches de l'axe de symétrie (7) précité que les macarons (4, 5).

8. Dispositif selon l'une quelconque des revendications 1 à 6, caractérisé par le fait que les extrémités d'attache des boucles (9, 10) sont plus éloignées de l'axe de symétrie (7) précité que les macarons (4, 5).

9. Dispositif selon la revendication 8, caractérisé par le fait que les deux macarons (4, 5) sont superposés, leurs contours coincidant au moins approximativement.

10. Dispositif selon la revendication 9, caractérisé par le fait que les deux macarons superposés constituent un unique disque (45) comportant pour les deux boucles (9, 10) deux gorges circulaires (4a, 5a) respectives disposées côte à côte et centrées sur l'axe du disque.

## Claims

1. Damped elastic stop device, constituting a self-damping spring, which presents progressive mechanical reactions corresponding to the algebraic sum of elastic reactions and frictions, this device, adapted to control the relative displacements of two parts mobile with respect to each other in a determined direction, being characterized by the fact that it comprises two identical loops (9, 10) of yarn which are contained in planes parallel to the direction (3) of relative displacement of the two parts (1, 2), these planes being very close or merged in the same plane (6), and are disposed symmetrically with respect to an axis (7) parallel to said direction (3), the yarn of each loop (9, 10), attached by its ends to one of the mobile parts, passing around a boss (4, 5) fast with the other part (1) on which it may slide with friction, whereas said yarn is made of a material offering a high tensile strength and a considerable capacity of elastic elongation, and that its constituent elements are geometrically dimensioned so that, when the mobile parts (1, 2) move from a relative rest position, the yarn of each loop (9, 10) undergoes a progressive elongation, and that the part of the yarn in direct or indirect contact with the boss (4, 5) slides on the peripheral surface thereof.

2. Device according to claim 1, characterized by the fact that the yarn of the loops (9, 10) is composed of fibers of synthetic polyamide or aramid resin.

3. Device according to claim 1 or 2, characterized by the fact that each boss (4, 5) has a circular peripheral contour.

4. Device according to any one of claims 1 to 3, characterized by the fact that each boss (4, 5) comprises on its contour a groove (4a, 5a) which receives the yarn of the corresponding loop (9, 10).

5. Device according to any one of claims 1 to 4, characterized by the fact that the yarn of each loop (9, 10) is, at least in its median portion, in contact with the boss (4, 5), covered with a friction sheath (11, 12) which protects it.

6. Device according to any one of claims 1 to 5, characterized by the fact that each loop (9, 10) is provided with a device (13, 14) for adjusting the tension of the yarn.

7. Device according to any one of claims 1 to 6, characterized by the fact that the ends for attachment of the loops (9, 10) are closer to said axis of symmetry (7) than the bosses (4, 5).

8. Device according to any one of claims 1 to 6, characterized by the fact that the ends for attachment of the loops (9, 10) are more remote from said axis of symmetry (7) than the bosses (4, 5).

9. Device according to claim 9, characterized by the fact that the two bosses (4, 5) are superposed, their contours coinciding at least approximately.

10. Device according to claim 9, characterized by the fact that the two superposed bosses constitute a single disc (45) comprising for the two loops (9, 10) two respective circular grooves (4a, 5a) disposed side by side and centred on the axis of the disc.

## Patentansprüche

1. Elastische, gedämpfte Anschlagvorrichtung, die eine selbstdämpfende Feder darstellt, die zunehmende mechanische Gegenkräfte entsprechend der algebraischen Summe aus elastischen Rückstell- und Reibkräften aufweist, und die geeignet zur Kontrolle der relativen Verschiebung zweier längs einer bestimmten Richtung gegeneinander beweglichen Teile ist, dadurch gekennzeichnet,

daß sie zwei gleichartige Seilschlaufen (9, 10) aufweist, die sich in Ebenen parallel zur Richtung (3) der relativen Verschiebung der zwei Teile (1, 2) erstrecken, wobei

diese Ebenen sehr nahe an einer Ebene (6) liegen oder mit ihr zusammenfallen und symmetrisch bezüglich einer zu der Richtung (3) parallelen Achse (7) angeordnet sind, und wobei

das Seil jeder Schlaufe (9, 10), deren jedes mit seinen Enden an dem einen (2) der beweglichen Teile (1, 2) befestigt ist, um eine Scheibe (4, 5) herumläuft, welche mit dem anderen Teil (1) verbunden ist und um die herum sie unter Reibung gleiten können, und wobei

das Seil aus einem Material gefertigt ist, welches große mechanische Zugfestigkeit sowie eine gewisse elastische Dehnungsfähigkeit aufweist,

daß die Bestandteile geometrisch derartig bemessen sind, daß, wenn die beweglichen Teile (1, 2) relativ zur Ruheposition verschoben sind, das Seil jeder Schleife eine zunehmende Verlängerung erfährt, und

daß das die Scheiben (4, 5) direkt oder indirekt berührende Seil um die äußere Oberfläche derselben gleitet.

2. Vorrichtung nach Anspruch 1, dadurch gekennzeichnet,

daß das Seil der Schlaufen (9, 10) aus den Kunstfasern Polyamid oder Aramid hergestellt wird.

3. Vorrichtung nah Anspruch 1 oder 2, dadurch gekennzeichnet,

daß jede Scheibe (4, 5) die äußere Form eines Kreises aufweist.

4. Vorrichtung nach einem der Ansprüche 1 bis 3, dadurch gekennzeichnet,

daß jede Scheibe (4, 5) auf ihrem Umfang eine Nut (4a, 5a) aufweist, die das Seil der jeweiligen Schlaufe (9, 10) aufnimmt.

5. Vorrichtung nach einem der Ansprüche 1 bis 4, dadurch gekennzeichnet,

daß das Seil jeder Schlaufe (9, 10) zumindest in seinem mittleren, in Kontakt mit der Scheibe (4, 5) befindlichen Teil mit einer Reibungsschutzhülle (11, 12) verkleidet ist, die es schützt.

6. Vorrichtung nach einem der Ansprüche 1 bis 5, dadurch gekennzeichnet,

daß das Seil jeder Schlaufe (9, 10) mit einer Vorrichtung (13, 14) zur Einstellung der Spannung des Seiles versehen ist.

7. Vorrichtung nach einem der Ansprüche 1 bis 6, dadurch gekennzeichnet,

daß sich die Enden zur Befestigung der Schlaufen (9, 10) näher an der Symmetrieachse (7) befinden als die Scheiben (4, 5).

8. Vorrichtung nach einem der Ansprüche 1 bis 6, dadurch gekennzeichnet,

daß sich die Enden zur Befestigung der Schlaufen (9, 10) weiter entfernt von der Symmetrieachse (7) befinden als die Scheiben (4, 5).

9. Vorrichtung nach Anspruch 8, dadurch gekennzeichnet,

daß die zwei Scheiben (4, 5) übereinandergelegt sind, wobei sich deren Konturen zumindest annäherungsweise decken.

10. Vorrichtung nach Anspruch 9, dadurch gekennzeichnet,

daß die zwei übereinandergelegten Scheiben eine einzige Scheibe (45) bilden, die für die zwei Schlaufen (9, 10) zwei jeweilige kreisförmige Nuten (4a, 5a) aufweist, welche nebeneinander angeordnet und bezüglich der Achse der Scheibe zentriert sind.

Fig. 1

Fig. 2

Fig. 3

Fig. 4